# EUROPÄISCHE PATENTANMELDUNG

(11) **EP 0 711 091 A1**
(43) Veröffentlichungstag der Anmeldung: **08.05.1996**
(21) Anmeldenummer: 95116679.2
(22) Anmeldetag: 23.10.1995
(51) Int. Cl.: H04Q 9/00

(54) **Funkfernsteuereinrichtung**

(30) Priorität: 04.11.1994 DE 4439541
(71) Anmelder: Firma J. Eberspächer, D-73730 Esslingen (DE)
(72) Erfinder: Hirt, Andreas, D-73207 Plochingen (DE)
(74) Vertreter: Klunker . Schmitt-Nilson . Hirsch

(57) **Zusammenfassung**

Funkfernsteuereinrichtung mit einem Sender (11) und einem ein HF-Modul (19) aufweisenden Funkempfänger, zur Fernsteuerung einer Fahrzeugzusatzeinrichtung mit einem Zusatzgerät, insbesondere Fahrzeugzusatzheizgerät, einer das Zusatzgerät steuernden Steuereinrichtung (39) und einer mit der Steuereinrichtung (39) zusammenwirkenden Schaltuhr (21). Das HF-Modul (19) des Funkempfängers ist in oder an der Schaltuhr (21) angeordnet und benutzt die Verbindungsleitungen (37) zwischen Schaltuhr (21) und Steuereinrichtung (39) mit.

## Beschreibung

Die Erfindung betrifft eine Funkfernsteuereinrichtung zur Fernsteuerung einer Fahrzeugzusatzeinrichtung, insbesondere Fahrzeugzusatzheizeinrichtung, gemäß Oberbegriff des Anspruchs 1.

Fahrzeugzusatzheizeinrichtungen weisen üblicherweise eine Steuereinrichtung auf, mittels welcher die einzelnen Funktionen des Fahrzeugzusatzheizgeräts gesteuert und überwacht werden, und eine Schaltuhr, mittels welcher vom Benutzer des Fahrzeugs Heizperioden eingestellt oder vorgewählt werden können. Es ist auch bekannt, solchen Fahrzeugzusatzheizeinrichtungen eine Funkfernsteuereinrichtung zuzuordnen, mit deren Hilfe der Benutzer des Fahrzeugs das Einschalten des Fahrzeugzusatzheizgeräts oder das Vorwählen eines Heizvorgangs von entfernter Stelle aus steuern kann.

Wird ein Fahrzeug mit einer Fahrzeugzusatzheizeinrichtung ausgerüstet, müssen das Fahrzeugzusatzheizgerät mit der zugehörigen Steuereinrichtung und die vom Fahrzeugzusatzheizgerät abgelegene Schaltuhr über Verbindungsleitungen elektrisch miteinander verbunden werden. Wird das Fahrzeug zusätzlich mit einem Funkempfänger einer Funkfernsteuereinrichtung ausgerüstet, müssen zusätzliche Verbindungsleitungen für die elektrische Verbindung des Funkempfängers mit der Steuereinrichtung des Fahrzeugzusatzheigeräts verlegt werden. Da Zusatzheizgeräte selbst beim Einbau in Neufahrzeuge selten am Herstellungsband des Fahrzeugherstellers gleich mit eingebaut werden, stellt der Einbau eines Fahrzeugzusatzheizgeräts mit dessen Zubehör meist eine Nachrüstung dar, selbst bei Neufahrzeugen. Bei einer solchen Nachrüstung stellt das Verlegen von Verbindungsleitungen für die Fahrzeugzusatzheizeinrichtung einen beträchtlichen Aufwand dar.

Aus der DE 42 15 221 A1 ist es bereits bekannt, bei der Ausrüstung eines Fahrzeugs mit einer funkfernsteuerbaren Fahrzeugzusatzheizeinrichtung das HF-Modul, mittels welchem die auf dem Funkweg empfangenen HF-Steuersignale in NF-Steuersignale demoduliert werden, in die Steuereinrichtung des Fahrzeugzusatzheizgeräts zu integrieren und zur Dekodierung der vom HF-Modul gelieferten NF-Steuersignale einen Dekoder der Steuereinrichtung des Fahrzeugszusatzheizgeräts zu benutzen. Auf diese Weise kam man die Verkabelung zwischen einem separat angeordneten Funkempfänger und der Steuereinrichtung des Fahrzeugzusatzheizgeräts und einen separaten Dekoder des Funkempfängers einsparen.

Nach den Technischen Anforderungen (TA) an Fahrzeugteile bei der Bauartprüfung nach § 22a StVZO, Nr. 27, Heizungen, die Grundlage für die ABG (Allgemeine Bauart-Genehmigung) und den FKFS-Prüfbericht (FKFS = Forschungsinstitut für KFZ und Fahrzeugmotoren der Universität Stuttgart) ist, darf die Steuereinrichtung eines Fahrzeugzusatzheizgerätes in ihrer Funktion nicht beeinträchtigt werden. Störungen in der Steuereinrichtung können sich sicherheitsrelevant auswirken. Störend wirken sich insbesondere HF-Einstrahlungen aus, die den Mikroprozessor der Steuereinrichtung des Fahrzeugzusatzheizgeräts beeinflussen. Dadurch kann es zu undefinierten und somit gefährlichen Betriebszuständen des Fahrzeugzusatzheizgeräts kommen. Dies muß gemäß den Technischen Anforderungen durch Schutzmaßnahmen wie Abschirmungsmaßnahmen verhindert werden.

Integriert man gemäß der genannten DE 42 15 221 A1 das HF-Modul des Funkempfängers in die Steuereinrichtung des Fahrzeugzusatzheizgeräts und somit innerhalb des die Steuereinrichtung aufnehmenden Gehäuses, läßt man HF-Signale in das Innere dieses Gehäuses ein, die dort erhebliche Störprobleme für die Steuereinrichtung mit sich bringen. Diese müssen mit erheblichem zusätzlichen Schutzaufwand beseitigt werden, um undefinierte und somit gefährliche Betriebszustände des Fahrzeugzusatzheizgeräts zu verhindern. HF-Störungen, denen man durch das Integrieren des HF-Moduls in die Steuereinrichtung des Fahrzeugzusatzheizgeräts die Tür geöffnet hat, muß man also aufwendig wieder unschädlich machen.

Der Erfindung liegt die Aufgabe zugrunde, eine Funkfernsteuereinrichtung der eingangs angegebenen Art verfügbar zu machen, für welche weder eine zusätzliche Verkabelung noch zusätzliche Entstörungsmaßnahmen erforderlich sind.

Die Lösung dieser Aufgabe ist im Anspruch 1 angegeben. Vorteilhafte Ausführungsformen der Erfindung sind in den Unteransprüchen angegeben.

Erfindungsgemäß wird also das HF-Modul in oder an der Schaltuhr angeordnet und benutzt das HF-Modul die Verbindungsleitungen zwischen Schaltuhr und Steuereinrichtung mit.

Aufgrund der erfindungsgemäßen Maßnahme bleibt es bei der Einsparung einer separaten Verkabelung zwischen Funkempfänger und Steuereinrichtung, da die ohnehin vorhandene Verkabelung zwischen Schaltuhr und Steuereinrichtung mitbenutzt wird. Da die Schaltuhr kein sicherheitsrelevanter Bereich im Sinn der ABG-Anforderungen ist, sind besondere Störschutzmaßnahmen gegen Störungen durch die vom HF-Modul des Funkempfängers empfangenen HF-Signale nicht erforderlich oder benötigen mindestens keinen derartigen Aufwand wie bei Integration des HF-Moduls in die Steuereinrichtung.

Ein Funkempfänger benötigt eine Antenne. Diese sollte möglichst dicht bei dem HF-Modul des Funkempfängers angeordnet sein, um die Empfangsqualität und damit die Sicherheit gegen Fehlinterpretationen der auf dem Funkweg empfangenen Steuersignale nicht durch zu lange Antennenleitungen zu verschlechtern oder um nicht eine relativ hohe Antennenempfangsleistung zu benötigen, die eine entsprechend hohe Sendeleistung des Senders und einen dementsprechend hohen Kostenaufwand für den Sender erfordert. Da sich das Fahrzeugzusatzheizgerät zusammen mit seiner Steuereinrichtung im Motorraum des Fahrzeugs befindet, muß daher die Antenne des Funkempfängers dann, wenn dessen HF-Modul in die Steuereinrichtung integriert ist, ebenfalls im Motorraum untergebracht werden. Dies erfordert nicht nur relativ hohen Antennenverlegeaufwand, der sich bei dem Nachrüsten eines Fahrzeugs mit der Fahrzeugzusatzheizeinrichtung besonders bemerkbar macht, sondern die Antenne des Funkempfängers befindet sich in diesem Fall in dichter Nähe von Störquellen wie beispielsweise der Zündspule.

Die Schaltuhr für das Fahrzeugzusatzheizgerät befindet sich dagegen außerhalb des Motorraums, nämlich am Armaturenbrett des Fahrzeugs, möglicherweise in dichter Nähe eines Autoradios. Die Antenne des Funkempfängers kann daher an leicht zugänglichen Stellen der Fahrzeugkarosserie montiert werden, mit entsprechend leichter Verlegung des Antennenkabels. Es besteht sogar die Möglichkeit, die Antenne für das Autoradio und dessen Antennenkabel für den Funkempfänger mitzubenutzen.

Da Schaltuhren für Fahrzeugzusatzheizeinrichtungen üblicherweise Schaltungskomponenten aufweisen, die auch bei der Weiterverarbeitung des von dem HF-Modul gelieferten NF-Signals benötigt werden, kann man auch bei der erfindungsgemäßen Lösung solche Schaltungskomponenten für den Funkempfänger einsparen, indem man für die Weiterverarbeitung des NF-Signals des Funkempfängers solche Schaltungskomponenten der Schaltuhr mitbenutzt. Dies gilt insbesondere für den in einer solchen Schaltuhr üblicherweise vorhandenen Mikroprozessor. Weist dieser keine Dekodiereinrichtung auf, braucht man den bisher für die Schaltuhr verwendeten Mikropozessor lediglich gegen einen Mikroprozessor mit Dekodiereinrichtung auszutauschen. Alternativ kann man dem Mikroprozessor der Schaltuhr einen Dekoder-Baustein hinzufügen und den Mikroprozessor dann für die Weiterverarbeitung der dekodierten Funkfernsteuersignale benutzen.

Funkfernsteuereinrichtungen für Fahrzeugzusatzheizgeräte haben üblicherweise neben reinen Einschaltfunktionen auch Timer-Funktionen für die Vorwahl von Heizvorgängen. Die zugehörigen Funkempfänger sind daher üblicherweise mit eigenen Uhren- und Timer-Schaltungskomponenten ausgerüstet. Verwendet man erfindungsgemäß die am Armaturenbrett des mit dem Fahrzeugzusatzheizgeräts ausgerüsteten Fahrzeugs angeordnete Schaltuhr für Funkempfänger-Funktionen mit, kann dies auch für die Mitbenutzung von Uhren- und Timer-Komponenten der Schaltuhr für die Funkfernsteuereinrichtung gelten. Durch das erfindungsgemäße Einbringen oder Anbringen des HF-Moduls in oder an der Schaltuhr kann man somit weitere separate Schaltungskomponenten einsparen.

Das HF-Modul kann man entweder in einem eigenen Gehäuse unterbringen, das man an der Schaltuhr anordnet, beispielsweise durch Anflanschen oder Anstecken. Oder man kann das HF-Modul im Gehäuse der Schaltuhr mitunterbringen. Dies ist unproblematisch, da die Schaltuhr, wie bereits erwähnt, keinen sicherheitsrelevanten Bereich im Sinn der ABG-Anforderungen darstellt.

Soll ein Fahrzeug mit einer Fahrzeugzusatzheizeinrichtung nachgerüstet werden, braucht je nach dem, ob eine Funkfernsteuereinrichtung vorgesehen werden soll oder nicht, lediglich eine Schaltuhr mit HF-Modul oder eine Schaltuhr ohne HF-Modul eingebaut zu werden. Möglicherweise ist es aus Stückzahl- und Lagerungshaltungsgesichtspunkten auch vorteilhaft, die Schaltuhren grundsätzlich mit dem HF-Modul zu versehen und je nach dem, ob eine Funkfernsteuereinrichtung vorgesehen ist oder nicht, dieses HF-Modul zu nutzen oder ungenutzt zu lassen.

Soll ein Fahrzeug, in das bereits eine Fahrzeugzusatzheizeinrichtung eingebaut ist, nachträglich mit einer Funkfernsteuereinrichtung ausgerüstet werden, braucht lediglich das entweder bereits vorhandene HF-Modul der Schaltuhr in Benutzung genommen oder eine nachträgliche Ausrüstung der Schaltuhr mit einem HF-Modul oder der Austausch gegen eine Schaltuhr mit HF-Modul vorgenomen und die Verbindung mit der Funkempfängerantenne hergestellt zu werden. Ein solches Nachrüsten mit einer Funkfernsteuereinrichtung erfordert somit einen relativ geringen Aufwand. Insbesondere ist keinerlei Eingriff in die Steuereinrichtung des Fahrzeugzusatzheizgeräts erforderlich und keine Nachrüstung hinsichtlich hochwirksamer Schutz- und Entstörungsmaßnahmen im Bereich der Steuereinrichtung.

Die Erfindung wird nun anhand eines Ausführungsbeispiels näher erläutert.

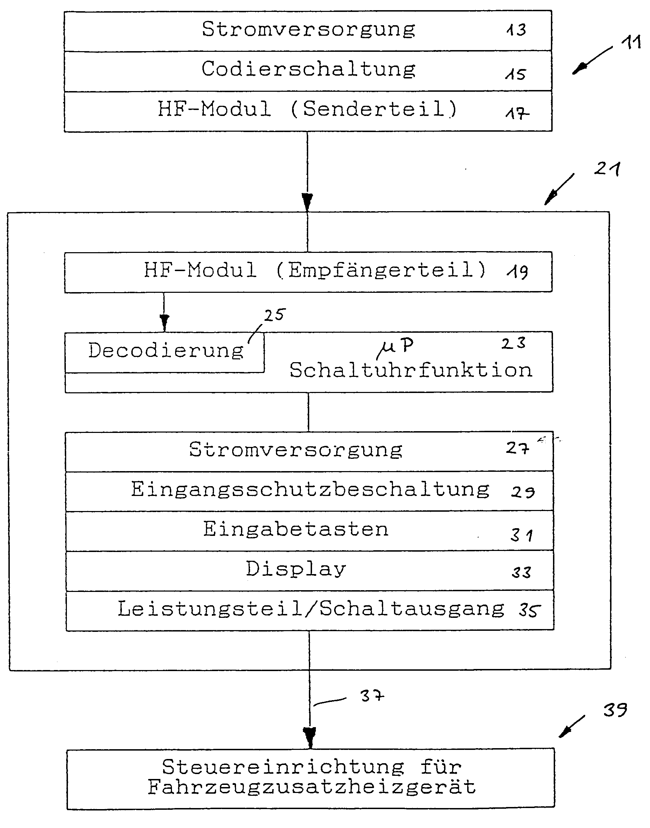

Die einzige Zeichnung zeigt in Blockschaltbilddarstellung eine erfindungsgemäße Funkfernsteuereinrichtung.

Die erfindungsgemäße Funkfernsteuereinrichtung umfaßt einen Sender 11, der in bekannter Weise eine Stromversorgung 13, eine Kodierschaltung 15 und ein senderseitiges HF-Modul 17 umfaßt. Außerdem umfaßt die Funkfernsteuereinrichtung einen Funkempfänger mit einer (nicht dargestellten) Antenne und einem emfpangsseitigen HF-Modul 19. Dieses ist in eine Schaltuhr 21 integriert, die einen Mikroprozessor 23 aufweist, der die Schaltuhrfunktion ausübt. Zwischen den Mikroprozessor 23 und das empfangsseitige HF-Modul ist ein Dekoder 25 zur Dekodierung der vom empfängerseitigen HF-Modul 19 gelieferten NF-Steuersignale geschaltet. Der Dekodierer 25 kann eine separate Schaltungskomponente sein oder kann in den Mikroprozessor 23 integriert sein.

Der Mikroprozessor 23 ist herkömmlicherweise in der Schaltuhr 21 bereits enthalten. Ihm braucht lediglich noch der Dekodierer 25 zugeordnet zu werden. Alternativ kann ein Mikroprozessor ohne integrierte Dekodiereinrichtung durch einen Mikroprozessor 23 mit integrierter Dekodiereinrichtung 25 ersetzt werden.

In bekannter Weise weist die Schaltuhr 21 außerdem eine Stromversorgung 27, eine Eingangschutzbeschaltung 29, Eingabetasten 31, eine Anzeigevorrichtung oder ein Display 33 sowie einen Leistungsteil 35 auf. Mittels einer Leitungsanordnung 37 ist der Leistungsteil 35 der Schaltuhr 21 mit einer Steuereinrichtung 39 für das (nicht dargestellte) Fahrzeugzusatzheizgerät verbunden.

Ein vom Sender 11 geliefertes Sendesignal wird über die Antenne dem empfangsseitigen HF-Modul 19 zugeleitet und dort zu einem NF-Steuersignal demoduliert. Dieses wird mit Hilfe des Dekoders 25 dekodiert und dann vom Mikroprozessor 23 ausgewertet. Der Mikroprozessor 23 bewirkt dann die weitere Steuerung in der gleichen Weise, wie er sie bewirken würde, wenn die Steuersignale, beispielsweise Einschalt- oder Ausschalt- oder Vorwahl-Steuersignale, den Mikroprozessor 23 nicht über das empfängerseitige HF-Modul 19 des Funkempfängers erreicht hätten sondern über mittels der Eingabetasten 31 eingegebener Steuersignale.

Eine Schaltuhr 21 weist herkömmlicherweise bereits eine Eingangsschutzbeschaltung 29 auf, um einen gewissen Schutz gegen Störsignale zu bieten. Der Aufwand hierfür braucht jedoch nicht besonders hoch zu sein, da sich die Schaltuhr nicht im sicherheitsrelevanten Bereich der Fahrzeugzusatzheizeinrichtung befindet. Der Einbau des empfängerseitigen HF-Moduls 19 in die Schaltuhr 21 erfordert daher keine zusätzliche Eingangsschutzbeschaltung.

Die erfindungsgemäße Lösung führt zu folgenden Vorteilen:
Es ist keine zusätzliche Arbeitszeit beim Einbau der Funkfernsteuerung erforderlich. Der Verdrahungs- und Montageaufwand ist identisch denen beim Einbau einer Schaltuhr herkömmlicher Art. Es ist keine zusätzliche Verkabelung erforderlich und es braucht kein Eingriff in die Steuereinrichtung und keine Nachrüstung der Steuereinrichtung mit aufwendigen Schutz- und Schirmmaßnahmen vorgenommen zu werden.

Durch weitgehende Benutzung bestehender Schaltuhrenkomponenten entfallen gegenüber einem eigenständigen Funkempfänger eine Schutzbeschaltung, ein Leistungsschaltungsteil, ein Gehäuse, ein Mikroprozessor, ein Dekoderbaustein und ein Kodierspeicherbaustein.

Die Mehrkosten für den in die Schaltuhr integrierten Funkempfänger bestehen aus einem HF-Empfangsmodul (Hardware) bekannter Art und einem zusätzlichen Dekodierprogrammteil (Software) des bestehenden Schaltuhrenmikroprozessors.

Es besteht Kompatibilität und Vereinheitlichung der Bedienungselemente. Außerdem kann man einheitliche Steckverbinder verwenden. Die Zusatzverkabelung für die Antennenzuleitung zur Schaltuhr ist im Vergleich zu einem in die Steuereinrichtung integrierten HF-Modul einfach.

Gegenüber den Abschirmungsmaßnahmen, wie sie bei Integration des HF-Moduls in die sicherheitsrelevante Steuereinrichtung erforderlich sind, benötigt die erfindungsgemäße Integration des HF-Moduls in die Schaltuhr entweder keinerlei oder nur geringfügige zusätzliche Abschirmungsmaßnahmen.

Die erfindungsgemäßen Maßnahmen können auch für andere schaltuhrsteuerbare oder funkfernsteuerbare Fahrzeugzusatzeinrichtungen angewendet werden.

## Patentansprüche

1. Funkfernsteuereinrichtung mit einem Sender (11) und einem ein HF-Modul (19) aufweisenden Funkempfänger, zur Fernsteuerung einer Fahrzeugzusatzeinrichtung mit einem Zusatzgerät, insbesondere Fahrzeugzusatzheitzgerät, einer das Zusatzgerät steuernden Steuereinrichtung (39) und einer mit der Steuereinrichtung (39) zusammenwirkenden Schaltuhr (21),
**dadurch gekennzeichnet,**
daß das HF-Modul (19) in oder an der Schaltuhr (21) angeordnet ist und die Verbindungsleitungen (37) zwischen Schaltuhr (21) und Steuereinrichtung (39) mitbenutzt.

2. Funkfernsteuereinrichtung nach Anspruch 1,
**dadurch gekennzeichnet,**
daß der Funkempfänger mindestens einen Teil der Schaltuhrkomponenten mitbenutzt.

3. Funkfernsteuereinrichtung nach Anspruch 1 oder 2,
**dadurch gekennzeichnet,**
daß die Schaltuhr einen Mikroprozessor (23) aufweist, daß das HF-Modul (19) einen HF-Demodulator aufweist, und daß das vom HF-Demodulator gelieferte NF-Fernsteuersignal von dem Mirkoprozessor (23) der Schaltuhr (21) weiterverarbeitet wird.

4. Funkfernsteuereinrichtung nach einem der Ansprüche 1 bis 3,
**dadurch gekennzeichnet,**
daß die Schaltuhr (21) einen Dekoder (25) aufweist, mittels welchem die NF-Fernsteuersignale vom HF-Demodulator dekodiert werden.

5. Funkfernsteuereinrichtung nach Anspruch 3,
**dadurch gekennzeichnet,**
daß der Mikroprozessor (23) einen eigenen Dekodierer (25) aufweist, mittels welchem die NF-Fernsteuersignale dekodierbar sind.

6. Funkfernsteuereinrichtung nach einem der Ansprüche 1 bis 5,
**dadurch gekennzeichnet,**
daß der Funkfernsteuereinrichtung zugeordnete Vorwahl- und Zeitsteuerfunktionen von entsprechenden Vorwahl- und Zeitsteuervorrichtungen der Schaltuhr (21) unter Steuerung durch den Funkempfänger ausgeführt werden.

7. Funkfernsteuereinrichtung nach einem der Ansprüche 1 bis 6,
**dadurch gekennzeichnet,**
daß das HF-Modul (19) in dem Gehäuse der Schaltuhr (21) untergebracht ist.

8. Funkfernsteuereinrichtung nach einem der Ansprüche 1 bis 6,
**dadurch gekennzeichnet,**
daß das HF-Modul (19) in einem separaten Gehäuse untergebracht ist, das mit der Schaltuhr mechanisch und elektrisch verbindbar ist.

9. Funkfernsteuereinrichtung nach Anspruch 8,
**dadurch gekennzeichnet,**
daß das Gehäuse des HF-Moduls (19) an ein Schaltuhrgehäuse anflanschbar oder ansteckbar ist.
